# EUROPEAN PATENT APPLICATION

(11) **EP 4 653 876 A1**
(43) Date of publication of application: **26.11.2025**
(21) Application number: 23917648.0
(22) Date of filing: 27.11.2023
(51) Int. Cl.: G01N 35/10, G01N 35/08

(54) **ANALYSIS DEVICE AND RINSING METHOD FOR FLOW PATH OF ANALYSIS DEVICE**

(30) Priority: 19.01.2023 JP 2023006637
(71) Applicant: HITACHI HIGH-TECH CORPORATION, Tokyo 105-6409 (JP)
(72) Inventor: YAMAMOTO, Haruyoshi, Tokyo 100-8280 (JP); KISHIOKA, Atsushi, Tokyo 100-8280 (JP); MIYAKE, Masafumi, Tokyo 105-6409 (JP)
(74) Representative: Mewburn Ellis LLP
(86) International application number: PCT/JP2023/042330
(87) International publication number: WO 2024/154436

(57) **Abstract**

A measurement liquid amount is reduced, and analysis performance is ensured while reducing a replacement frequency of components. A measurement control device 1100 of an automatic electrolyte analysis device 1000 controls an operation of a variable mechanism 1053 that can vary a relative position between a sample cup 1010 and a liquid sample aspiration nozzle 1052 to dispose the liquid sample aspiration nozzle 1052 in the liquid of a liquid sample 1011 contained in the sample cup 1010 and in air, and controls an operation of a syringe pump 1051 as a liquid feeding mechanism, to introduce the liquid sample 1011 divided by one or a plurality of gases into a flow path 1054 and rinse the flow path 1054.

## Description

### Technical Field

The present disclosure relates to an analysis device and a rinsing method for a flow path of the analysis device.

### Background Art

As an example of a method for rinsing a sample feeding pipeline with a part of the next sample to prevent the influence of the previous sample, PTL 1 describes "A rinsing method for a pipeline in an analysis device or the like, in which an air transport pipe is branched and connected into a pipeline for transporting a sample, the analysis device including: means for feeding air as a bubble from the air transport pipe to at least one or more places in a flow of the sample in a process of transporting the sample; means for controlling a flow rate of the sample and a feeding amount of the air to appropriate values; and means for drawing a part of the feed-side sample to the air transport pipeline side after final bubble is fed after the sample is fed".

### Citation List

### Patent Literature

PTL 1: JP H07-069331 B

### Summary of Invention

### Technical Problem

Ion-selective electrodes can rapidly quantify the concentration of ions to be measured, and thus they are used in a wide range of fields such as biological, medical, and environmental fields. In particular, ion-selective electrodes have recently been used widely in the medical field because there is a close relationship between a metabolic reaction of a living body and an ion concentration, and it is possible to diagnose a hypertension symptom, a kidney disease, a neurological disorder, or the like by quantifying a specific ion (sodium, potassium, chlorine, etc.) contained in a biological sample such as blood or urine.

The electrolyte concentration in the living body is usually maintained in a narrow concentration range, and even a slight change in the concentration has a significant meaning. Thus, ion selective electrodes are required to have extremely high measurement accuracy, and various techniques have been developed to reduce measurement errors as much as possible.

There is a need to continuously analyze a large number of specimens in a clinical setting.

Many of the electrolyte analysis devices use a method called an ion-selective electrode method. In the ion-selective electrode method, an electrolyte concentration in a specimen is measured by measuring a potential difference between an ion-selective electrode and a reference electrode. The ion-selective electrode includes an ion-sensitive membrane in which a potential difference is generated in response to an ionic component, and the sensitive membrane responds to the ionic component sensitively with respect to its surface.

This potential varies depending on the electrolyte concentration in the specimen. The reference electrode is configured to contact a solution called a reference electrode solution to maintain a reference potential. As the reference electrode solution, for example, a high-concentration KCl aqueous solution is used.

A flow cell type device can be formed as an ion-selective electrode or a reference electrode to realize a high throughput. In the flow cell type device, a flow path for supplying a sample to be measured is provided inside a housing, and a sensitive membrane is provided in contact with the flow path. Since the sensitive membrane sensitively responds to an ion component with respect to its surface, there is a possibility that the sample to be measured cannot be accurately measured when a sample other than the measurement target remains on the surface of the sensitive membrane.

In such a flow cell type electrolyte analysis device, a sample and a reagent such as a standard solution pass through a flow path. When a sample or the like is fed to a flow path and analyzed, it is necessary to sufficiently clean and remove a previously measured sample adhering to and remaining in the flow path before the sample is fed to the flow path. Thus, before the measurement of a sample, it is common to feed a part of the sample to the flow path and "rinse" the inside of the flow path with the sample.

In PTL 1, an air transport pipe is branched and connected to a pipeline through which a sample is transported, and air is intermittently introduced from the air transport pipe into the pipeline through which the sample flows using a pinch valve, whereby rinsing of the pipeline is performed. However, in PTL 1, the flow path branched and connected is worn every time the pinch valve is opened and closed, and the frequency of replacement of the flow path components increases. In particular, when the number of analysis processing is large, the frequency of replacement of the flow path components becomes remarkably high.

The present disclosure has been made in view of the above and provides an analysis device capable of reducing a measurement liquid amount and ensuring analysis performance while reducing a replacement frequency of components, and a rinsing method for a flow path of the analysis device.

### Solution to Problem

An analysis device of the present disclosure includes a cup configured to contain a liquid sample to be measured, a nozzle configured to aspirate the liquid sample from the cup, a flow path through which the liquid sample aspirated by the nozzle passes, a measurement unit provided on the flow path and configured to measure the liquid sample, a liquid feeding mechanism configured to feed the liquid sample in the flow path, a variable mechanism configured to vary a relative position between the cup and the nozzle, and a control device configured to control operations of the variable mechanism and the liquid feeding mechanism, wherein the control device is configured to control the operation of the variable mechanism to dispose the nozzle in liquid of the liquid sample contained in the cup or in air, control the operation of the liquid feeding mechanism to introduce the liquid sample divided by one or a plurality of gases into the flow path, and to rinse the flow path.

A rinsing method for a flow path of an analysis device of the present disclosure includes containing a liquid sample to be measured in a cup, controlling an operation of a variable mechanism configured to vary a relative position between the cup and a nozzle configured to aspirate the liquid sample from the cup to dispose the nozzle in liquid of the liquid sample contained in the cup and in air, controlling an operation of a liquid feeding mechanism configured to feed the liquid sample in a flow path through which the liquid sample aspirated by the nozzle passes to introduce the liquid sample divided by one or a plurality of gases into the flow path and rinse the flow path, and controlling the operations of the variable mechanism and the liquid feeding mechanism after introducing the liquid sample divided by one or the plurality of gases into the flow path to introduce the liquid sample for measurement to a measurement unit on the flow path configured to measure the liquid sample.

### Advantageous Effects of Invention

According to the present disclosure, a measurement liquid amount can be reduced, and analysis performance can be ensured while reducing a replacement frequency of components.

Other objects and novel features will become apparent from the description of the present specification and the accompanying drawings.

### Brief Description of Drawings

[FIG. 1] FIG. 1 is a diagram illustrating a schematic configuration of an automatic electrolyte analysis device 1000.
[FIG. 2] FIG. 2 is a diagram illustrating an arrangement position of a liquid sample aspiration nozzle 1052.
[FIG. 3] FIG. 3 is a diagram illustrating an arrangement position of the liquid sample aspiration nozzle 1052.
[FIG. 4] FIG. 4 is a diagram illustrating arrangement positions of a draining nozzle 1205 and the liquid sample aspiration nozzle 1052.
[FIG. 5] FIG. 5 is a flowchart illustrating an outline of a measurement operation executed in the automatic electrolyte analysis device 1000.
[FIG. 6] FIG. 6 is a flowchart illustrating details of a measurement step S13000 in FIG. 5.
[FIG. 7] FIG. 7 is a time chart illustrating a position of the liquid sample aspiration nozzle 1052 and an operation of a syringe pump 1051 in a liquid sample introduction step S13140 in FIG. 6.
[FIG. 8] FIG. 8 is a schematic diagram illustrating a portion with a high possibility that the effect of the rinsing using a liquid sample 1011 divided by gas affects the analysis performance.
[FIG. 9] FIG. 9 is a schematic diagram illustrating a state in which the liquid sample 1011 divided by gas is pushed by any liquid or gas, and the liquid sample 1011 is held at a position up to Cl-ISE 1071, K-ISE 1072, Na-ISE 1073, and liquid junction 1080 in a flow path 1054.
[FIG. 10] FIG. 10 is a flowchart illustrating details of the liquid sample introduction step S13140 in FIG. 6.

### Description of Embodiments

Hereinafter, embodiments of the present disclosure will be described with reference to the drawings. Examples are presented for describing the present disclosure, and they are omitted and simplified as appropriate for clarity of description. The present disclosure can be implemented in various other forms. Unless otherwise specified, each component may be singular or plural.

Positions, sizes, shapes, ranges, and the like of the components illustrated in the drawings do not always represent actual positions, sizes, shapes, ranges, and the like to facilitate understanding of the invention. Thus, the present disclosure is not necessarily limited to the position, size, shape, range, and the like disclosed in the drawings.

When there is a plurality of components having the same or similar functions, the same reference numerals may be attached with different subscripts for description. When it is not necessary to distinguish the plurality of components, the description may be made by omitting the subscripts.

In the embodiments, processing performed by executing a program may be described. Here, a computer executes a program with a processor (for example, a central processing unit (CPU) or a graphics processing unit (GPU)) and performs processing defined by the program using a storage resource (for example, a memory), an interface device (for example, a communication port), and the like. Thus, the subject of the processing performed by executing the program may be a processor. Similarly, the subject of the processing performed by executing the program may be a controller, a device, a system, a computer, or a node having a processor. The subject of the processing performed by executing the program is an arithmetic unit, and the subject may include a dedicated circuit that performs specific processing. Here, the dedicated circuit is, for example, a field programmable gate array (FPGA), an application specific integrated circuit (ASIC), a complex programmable logic device (CPLD), or the like.

The program may be installed on the computer from a program source. The program source may be, for example, a program distribution server or a computer-readable storage medium. When the program source is a program distribution server, the program distribution server may include a processor and a storage resource that stores a distribution target program, and the processor of the program distribution server may distribute the distribution target program to another computer. In Examples, two or more programs may be realized as one program, or one program may be realized as two or more programs.

### (Device Configuration of Automatic Electrolyte Analysis Device 1000)

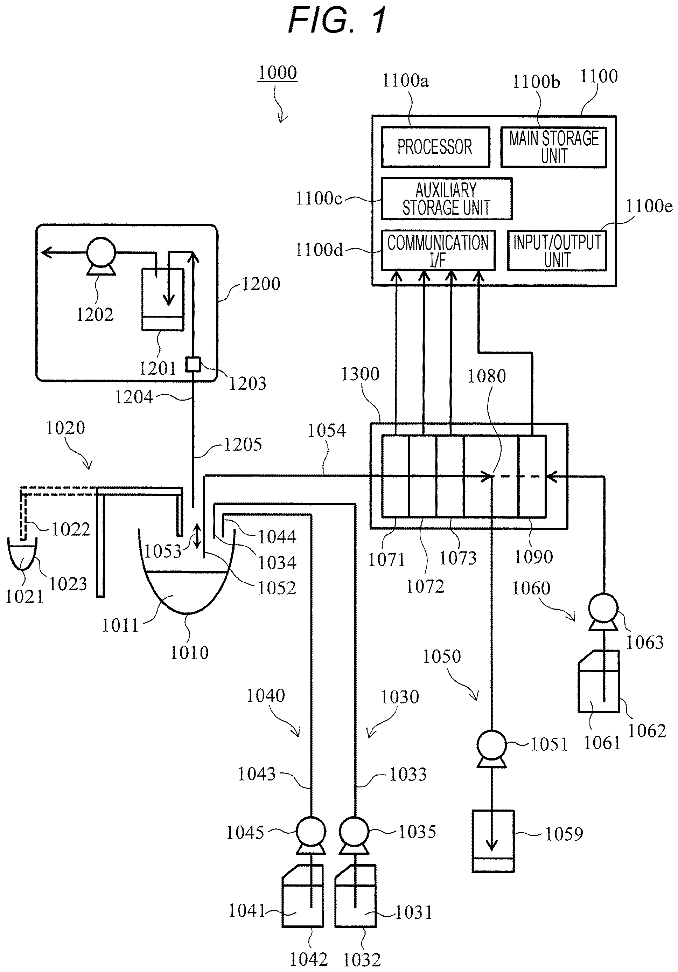

First, the overall configuration of an automatic electrolyte analysis device 1000 will be described with reference to FIG. 1. FIG. 1 is a diagram illustrating a schematic configuration of the automatic electrolyte analysis device 1000.

The automatic electrolyte analysis device 1000 illustrated in FIG. 1 is a device for measuring an ion concentration contained in a specimen. The automatic electrolyte analysis device 1000 includes a sample cup 1010, a specimen pipetting mechanism 1020, a diluent pipetting mechanism 1030, an internal standard solution pipetting mechanism 1040, a liquid sample introduction mechanism 1050, a reference electrode solution feeding mechanism 1060, a measurement control device 1100, a sample cup draining mechanism 1200, and a measurement unit 1300.

In the following description, an example in which the present invention is applied to an automatic electrolyte analysis device is shown, but the present invention can be applied to other analysis devices and electrolyte analysis devices.

### (Measurement Control Device 1100)

The measurement control device 1100 controls the operation of each unit in the automatic electrolyte analysis device 1000 (the specimen pipetting mechanism 1020, the diluent pipetting mechanism 1030, the internal standard solution pipetting mechanism 1040, the liquid sample introduction mechanism 1050, the reference electrode solution feeding mechanism 1060, and the sample cup draining mechanism 1200). The measurement control device 1100 receives a measurement result from the measurement unit 1300 and performs analysis and the like on the measurement result.

The measurement control device 1100 includes a processor 1100a, a main storage unit 1100b, an auxiliary storage unit 1100c, a communication I/F 1100d, and an input/output unit 1100e. The processor 1100a is a CPU, a GPU, a digital signal processor (DSP), an ASIC, or the like. The main storage unit 1100b is a dynamic random access memory (DRAM) or the like and is used as a work area of the processor 1100a. The auxiliary storage unit 1100c is a hard disk drive (HDD), a solid state drive (SSD), or the like. The auxiliary storage unit 1100c stores a control program for controlling the operation of each unit in the automatic electrolyte analysis unit 1000, an analysis program for analyzing the measurement result, and the like. The communication I/F 1100d is an interface such as a USB, is communicably connected to the measurement unit 1300 and the like, and receives the measurement result from the measurement unit 1300, for example. The input/output unit 1100e is a display, a keyboard, a mouse, or the like. I/F is an abbreviation of an interface.

The measurement control device 1100 is configured as one computer including the processor 1100a, the main storage unit 1100b, the auxiliary storage unit 1100c, the communication I/F 1100d, and the input/output unit 1100e, but it may be configured as a plurality of computers.

The control of the operation of each device with the measurement control device 1100 is executed based on various programs recorded in the auxiliary storage unit 1100c. The operation control processing executed by the measurement control device 1100 may be integrated into one program, may be divided into a plurality of programs, or may be a combination thereof. A part or all of the program may be realized by dedicated hardware or may be modularized.

### (Specimen Pipetting Mechanism 1020)

The specimen pipetting mechanism 1020 includes a specimen pipetting nozzle 1022 and a specimen container 1023 that contains a specimen 1021. The specimen pipetting mechanism 1020 aspirates the specimen 1021 contained in the specimen container 1023 into the specimen pipetting nozzle 1022. Thereafter, the specimen pipetting nozzle 1022 brings its tip portion into contact with the inner wall surface of the sample cup 1010 and discharges all or a part of the aspirated specimen 1021 to the sample cup 1010.

### (Sample Cup 1010)

The sample cup 1010 is a container-shaped component used for pipetting the specimen 1021. The sample cup 1010 contains the specimen 1021, a diluent 1031, and an internal standard solution 1041. The specimen 1021 is diluted with the diluent 1031 in the sample cup 1010 at a predetermined ratio and is introduced into the measurement unit 1300 in the subsequent stage as a liquid sample 1011.

It is possible to adopt not only a form in which the specimen 1021 is diluted but also a form in which the specimen 1021 is drawn into a flow path 1054 without being diluted.

### (Measurement Unit 1300)

The measurement unit 1300 includes one or a plurality of ion-selective electrodes and a reference electrode and measures a specific ion concentration of the liquid sample 1011. The measurement unit 1300 includes a flow cell type chloride ion selective electrode (hereinafter referred to as "Cl-ISE") 1071, a flow cell type potassium ion selective electrode (hereinafter referred to as "K-ISE") 1072, a flow cell type sodium ion selective electrode (hereinafter referred to as "Na-ISE") 1073, a flow cell type liquid junction 1080, and a flow cell type reference electrode 1090 provided in the middle of the flow path 1054. The specific ion concentration of the liquid sample 1011 extracted from the sample cup 1010 is measured by the measurement unit 1300 having the above-described configuration (Cl-ISE 1071, K-ISE 1072, Na-ISE 1073, the liquid junction 1080, and the reference electrode 1090).

### (Diluent Pipetting Mechanism 1030)

The diluent pipetting mechanism 1030 includes a diluent container bottle 1032 that contains the diluent 1031, a diluent flow path 1033, a diluent pipetting nozzle 1034, and a diluent pump 1035. When the diluent pump 1035 is driven, the diluent 1031 is aspirated from the diluent container bottle 1032 and passes through the diluent flow path 1033. Then, the diluent pipetting nozzle 1034 supplies the diluent 1031 to the sample cup 1010. In the case of a form of directly drawing the specimen 1021 into the flow path 1054 unlike the form of diluting the specimen 1021, the diluent pipetting mechanism 1030 is not necessarily provided.

### (Internal Standard Solution Pipetting Mechanism 1040)

Similarly, the internal standard solution pipetting mechanism 1040 includes an internal standard solution container bottle 1042 that contains an internal standard solution 1041 that is a liquid used for analysis of the specimen 1021, an internal standard solution flow path 1043, an internal standard solution pipetting nozzle 1044, and an internal standard solution pump 1045. When the internal standard solution pump 1045 is driven, the internal standard solution 1041 is aspirated from the internal standard solution container bottle 1042 and passes through the internal standard solution flow path 1043. Then, the internal standard solution pipetting nozzle 1044 supplies the internal standard solution to the sample cup 1010.

### (Liquid Sample Introduction Mechanism 1050)

The liquid sample introduction mechanism 1050 includes a syringe pump 1051 as a liquid feeding mechanism, a liquid sample aspiration nozzle 1052, a liquid sample aspiration nozzle/sample cup relative position variable mechanism 1053 (hereinafter, appropriately abbreviated as variable mechanism 1053), a flow path 1054 connected to the liquid sample aspiration nozzle 1052, and a waste liquid reservoir 1059. When the syringe pump 1051 is driven, the liquid sample aspiration nozzle 1052 aspirates the liquid sample 1011 from the sample cup 1010. The liquid sample 1011 aspirated by the liquid sample aspiration nozzle 1052 passes through Cl-ISE 1071, K-ISE 1072, Na-ISE 1073, and the liquid junction 1080 on the flow path 1054 and is drained to the waste liquid reservoir 1059.

The liquid sample introduction mechanism 1050 can introduce not only the liquid sample 1011 but also a gas into the flow path 1054. Details of the method for introducing the liquid sample 1011 and a gas will be described later.

The tip portion of the liquid sample aspiration nozzle 1052 is movable in up-down directions with the variable mechanism 1053 and can be disposed in the liquid of the liquid sample 1011 contained in the sample cup 1010 and in the air. The variable mechanism 1053 may be a mechanism including a stepping motor or a mechanism including a solenoid.

### (Reference Electrode Solution Feeding Mechanism 1060)

The reference electrode solution feeding mechanism 1060 includes a reference electrode solution container bottle 1062 that contains the reference electrode solution 1061 and a reference electrode solution pump 1063. When the reference electrode solution pump 1063 is driven, the reference electrode solution 1061 in the reference electrode solution container bottle 1062 is aspirated, passes through the liquid junction 1080, and is drained to the waste liquid reservoir 1059.

### (Sample Cup Draining Mechanism 1200)

The sample cup draining mechanism 1200 includes a waste liquid trap 1201, a vacuum pump 1202, an electromagnetic valve 1203, a waste liquid flow path 1204, a draining nozzle 1205 forming a tip portion of the waste liquid flow path 1204, and an up-down direction drive mechanism (not illustrated) for the draining nozzle 1205. The vacuum pump 1202 is positioned downstream of the waste liquid trap 1201 and introduces the waste liquid aspirated from the draining nozzle 1205 through the electromagnetic valve 1203 in an open state into the waste liquid trap 1201. The waste liquid temporarily stored in the waste liquid trap 1201 is transferred to the waste liquid reservoir 1059 by a waste liquid transfer mechanism (not illustrated).

### (Arrangement Position of Liquid Sample Aspiration Nozzle 1205 and Draining Nozzle 1052)

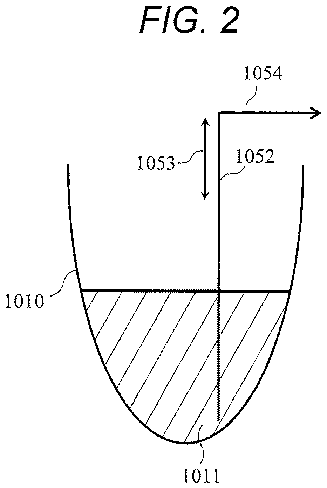

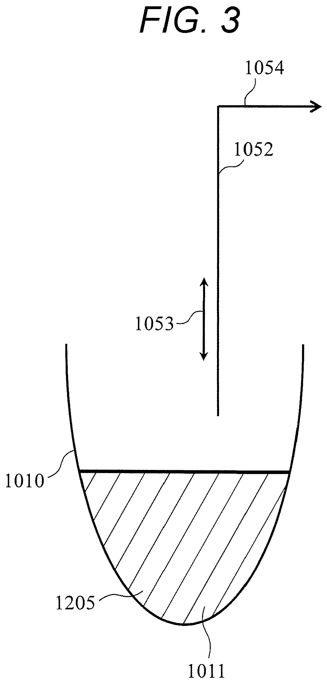

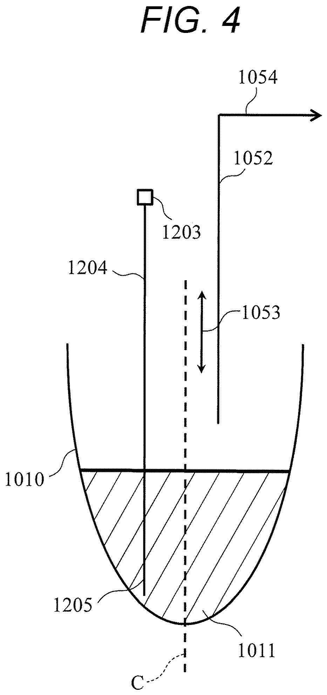

FIGS. 2 and 3 are diagrams illustrating arrangement positions of the liquid sample aspiration nozzle 1052. FIG. 4 is a diagram illustrating an arrangement position of the draining nozzle 1205 and the liquid sample aspiration nozzle 1052. Next, the arrangement positions of the liquid sample aspiration nozzle 1052 and the draining nozzle 1205 will be described with reference to FIGS. 2 to 4.

FIG. 2 is a diagram illustrating an arrangement position of the liquid sample aspiration nozzle 1052 when the liquid sample 1011 is aspirated. As illustrated in FIG. 2, when the liquid sample 1011 in the sample cup 1010 is aspirated, the variable mechanism 1053 moves the position of the liquid sample aspiration nozzle 1052 such that the tip portion of the liquid sample aspiration nozzle 1052 is positioned in the liquid of the liquid sample 1011. The syringe pump 1051 is driven in a state where the tip portion of the liquid sample aspiration nozzle 1052 is positioned in the liquid of the liquid sample 1011, whereby the liquid sample 1011 in the sample cup 1010 is aspirated, and the liquid sample 1011 is introduced into the flow path 1054.

FIG. 3 is a diagram illustrating an arrangement position of the liquid sample aspiration nozzle 1052 when a gas is aspirated. As illustrated in FIG. 3, when a gas is aspirated, the variable mechanism 1053 moves the position of the liquid sample aspiration nozzle 1052 such that the tip portion of the liquid sample aspiration nozzle 1052 is positioned in the air above the sample cup 1010. The syringe pump 1051 is driven in a state where the tip portion of the liquid sample aspiration nozzle 1052 is positioned in the air, whereby a gas is aspirated, and the gas is introduced into the flow path 1054. Pulsating flow is less likely to occur in the syringe pump. Thus, the introduction amount into the flow path 1054 can be easily controlled with accuracy even when the amount of the liquid sample or gas to be aspirated is small.

FIG. 4 is a diagram illustrating an arrangement position of the draining nozzle 1205 when the waste liquid is aspirated. As illustrated in FIG. 4, when the waste liquid is aspirated, the variable mechanism (not illustrated) moves the position of the draining nozzle 1205 such that a tip portion of the draining nozzle 1205 is positioned in the liquid of the waste liquid (liquid sample 1011). The vacuum pump 1202 is driven in a state where the tip portion of the draining nozzle 1205 is positioned in the liquid of the waste liquid (liquid sample 1011), whereby the waste liquid (liquid sample 1011) in the sample cup 1010 is aspirated, introduced into the waste liquid flow path 1204, and drained to the waste liquid trap 1201 via the electromagnetic valve 1203.

In the present embodiment, the liquid sample aspiration nozzle 1052 and the draining nozzle 1205 are disposed at positions (positions separated by 180°) facing each other across a central axis C (see FIG. 4) of the sample cup 1010. Then, the liquid sample aspiration nozzle 1052 and the draining nozzle 1205 move in the up-down directions parallel to the central axis C with respective dedicated up-down direction drive mechanisms.

In the present embodiment, a plurality of flow paths for calibration liquid or the like may be provided as necessary.

### (Measurement Operation)

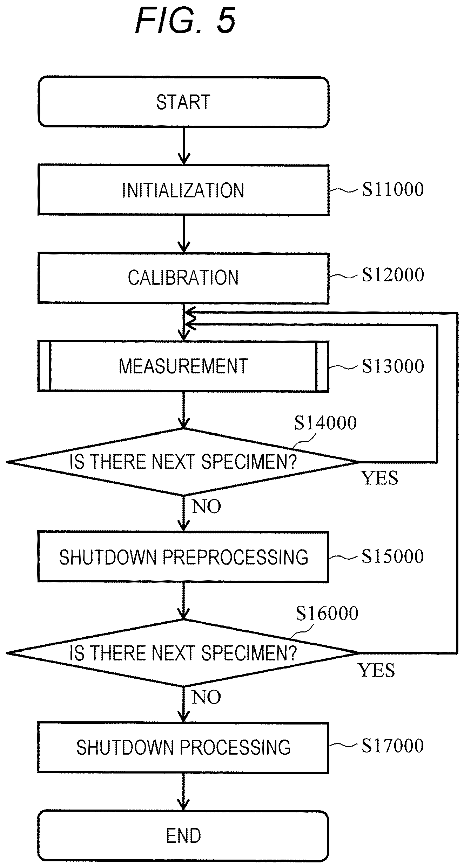

FIG. 5 is a flowchart illustrating an outline of a measurement operation executed in the automatic electrolyte analysis device 1000. A measurement operation executed in the automatic electrolyte analysis device 1000 will be described with reference to FIG. 5. The measurement operation executed in the automatic electrolyte analysis device 1000 is automatically and continuously executed by a program included in the measurement control device 1100.

In the case of the present embodiment, the measurement control device 1100 executes an initialization step S11000 and a calibration step S12000 after the activation of the automatic electrolyte analysis device 1000.

Thereafter, the measurement control device 1100 repeats the measurement step S13000 by the number of specimens and executes a determination step S14000 of determining whether all the specimens have been measured.

When determining that all the specimens have been measured (S14000: No), the measurement control device 1100 executes a shutdown preprocessing step S15000.

After executing the shutdown preprocessing step S15000, the measurement control device 1100 executes a next specimen presence/absence determination step S16000 and determines whether there is a next specimen. When it is determined that there is a next specimen (S16000: Yes) in the next specimen presence/absence determination step S16000, a measurement step S13000 is executed.

When it is determined that there is no next specimen in the next specimen presence/absence determination step S16000 (S16000: No), the measurement control device 1100 performs a shutdown step S17000.

Hereinafter, details of each step described above will be described.

### (Initialization Step S11000)

The initialization step S11000 includes preparation such as start-up and cleaning of each element mechanism constituting the automatic electrolyte analysis device 1000. As a part of the initialization, the measurement control device 1100 performs feeding of the reference electrode solution 1061 to the flow cell type liquid junction 1080 via the reference electrode 1090. The measurement control device 1100 performs pipetting of the internal standard solution 1041 into the sample cup 1010 and performs feeding of the internal standard solution to the flow cell type liquid junction 1080 via Cl-ISE 1071, K-ISE 1072, and Na-ISE 1073. Conditioning of each ISE is performed through this liquid feeding.

### (Calibration Step S12000)

The calibration step S12000 includes a low-concentration standard solution measurement step, a high-concentration standard solution measurement step, a calibration solution measurement step, a calibration curve creation step, and the like. The measurement procedure for the low-concentration standard solution, the high-concentration standard solution, and the calibration solution is in accordance with the measurement step S13000 described later. The standard solution of each concentration and the calibration solution are measured in the same manner as the specimen, and the electromotive force of each ISE is recorded.

In the calibration curve creation step, the measurement control device 1100 obtains a slope sensitivity from the electromotive force measurement results of the standard solution having two concentrations of high and low. The measurement control device 1100 obtains the concentration of the internal standard solution based on the slope sensitivity and the electromotive force of the internal standard solution. In addition, the measurement control device 1100 obtains a calculated concentration of the calibration solution based on the electromotive force measurement result and the slope sensitivity of the calibration solution.

The measurement control device 1100 obtains an offset correction value based on the difference between the true concentration (display value) of the calibration solution and the calculated concentration of the calibration solution. The slope sensitivity and the offset correction value are collectively referred to as "calibration curve".

### (Measurement Step S13000)

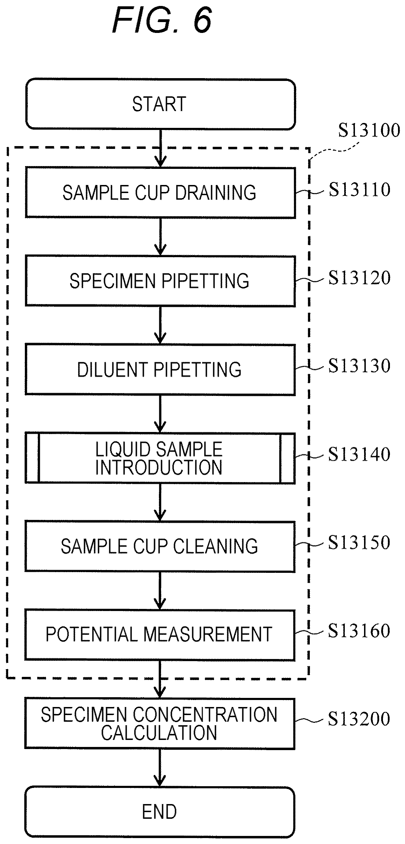

The measurement step S13000 mainly includes a specimen measurement step S13100 (see FIG. 6) and a specimen concentration calculation step S13200 (see FIG. 5). Details of the measurement step S13000 will be described later.

Since the determination step S14000, the shutdown preprocessing step S15000, the next specimen presence/absence determination step S16000, and the shutdown step S17000 are general processing in the analysis device, the description thereof will be omitted.

### (Details of Measurement Step S13000)

FIG. 6 is a flowchart illustrating details of the measurement step S13000 in FIG. 5. As described above, the measurement step S13000 mainly includes the specimen measurement step S13100 and the specimen concentration calculation step S13200. Next, the measurement step S13000 will be described in detail with reference to FIG. 6.

### (Specimen Measurement Step S13100)

The specimen measurement step S13100 includes a sample cup draining step S13110, a specimen pipetting step S13120, a diluent pipetting step S13130, a liquid sample introduction step S13140, a sample cup cleaning step S13150, and a potential measurement step S13160. After the specimen measurement step S13100, the specimen concentration calculation step S13200 is executed. Hereinafter, each step of the specimen measurement step S13100 and the specimen concentration calculation step S13200 will be described in detail.

The measurement control device 1100 executes the sample cup draining step S13110. In the sample cup draining step S13110, the measurement control device 1100 controls the operation of the sample cup draining mechanism 1200 to drain the liquid (the internal standard solution 1041, the diluent 1031, system water (not illustrated), and the like) in the sample cup 1010. The electromagnetic valve 1203 is closed until this step is started. The electromagnetic valve 1203 is basically closed in the steps other than the draining of the waste liquid in the sample cup 1010. When the electromagnetic valve 1203 is opened, the inside of the waste liquid flow path 1204 and the waste liquid trap 1201 is exhausted and decompressed by the action of the vacuum pump 1202. On the other hand, when the electromagnetic valve 1203 is closed, the pressure in the draining nozzle 1205 is maintained at atmospheric pressure.

After the start of the measurement step S13000, the measurement control device 1100 drives the up-down direction drive mechanism (not illustrated) to immerse the tip portion of the draining nozzle 1205 in the waste liquid of the sample cup 1010 (see FIG. 4). In this state, the measurement control device 1100 opens the electromagnetic valve 1203 and provides a decompressed environment to the sample cup 1010 through the draining nozzle 1205.

The waste liquid in the sample cup 1010 is drained to the waste liquid trap 1201 via the draining nozzle 1205, the waste liquid flow path 1204, and the electromagnetic valve 1203. After draining the waste liquid for a certain period of time, the measurement control device 1100 closes the electromagnetic valve 1203 to cut off the decompression. The pressure in the draining nozzle 1205 thus returns to the atmospheric pressure. Then, the measurement control device 1100 drives the up-down direction drive mechanism (not illustrated) to dispose the tip portion of the draining nozzle 1205 vertically above the sample cup 1010. That is, the tip portion of the draining nozzle 1205 is moved to the outside of the sample cup 1010.

### (Specimen Pipetting Step S13120)

Next, the measurement control device 1100 executes the specimen pipetting step S13120. In the specimen pipetting step S13120, the measurement control device 1100 controls the operation of the specimen pipetting mechanism 1020 to aspirate the specimen 1021 in the specimen container 1023 into the specimen pipetting nozzle 1022. Thereafter, the measurement control device 1100 disposes the tip portion of the specimen pipetting nozzle 1022 close to the inner wall of the sample cup 1010 and causes the nozzle to discharge all of the aspirated specimen 1021 to the sample cup 1010.

### (Diluent Pipetting Step S13130)

Next, the measurement control device 1100 executes the diluent pipetting step S13130. In the diluent pipetting step S13130, the measurement control device 1100 controls the operation of the diluent pipetting mechanism 1030 to discharge the diluent 1031 to the sample cup 1010 via the diluent pipetting nozzle 1034. The sample cup 1010 contains the specimen 1021 discharged in the specimen pipetting step S13120 described above, and the diluent 1031 is discharged from the position above the specimen 1021 toward the specimen 1021.

The diluent 1031 rolls the specimen 1021 along the inner surface of the sample cup 1010 and flows into an inner bottom portion of the sample cup 1010, the specimen 1021 is diluted with the diluent 1031, and both are uniformly mixed. In the diluent pipetting step S13130, a diluted sample obtained by diluting the specimen 1021 with the diluent 1031 at a predetermined ratio (hereinafter, referred to as "dilution ratio") is referred to as the liquid sample 1011, and the liquid sample 1011 is contained in the sample cup 1010. The diluted sample is a type of the liquid sample 1011. When the specimen 1021 is not diluted, the specimen 1021 in the sample cup 1010 becomes the liquid sample 1011, and the specimen 1021 (liquid sample 1011) is used.

### (Liquid Sample Introduction Step S13140)

Next, the measurement control device 1100 executes the liquid sample introduction step S13140. In the liquid sample introduction step S13140, the measurement control device 1100 controls the operation of the variable mechanism 1053 to immerse the liquid sample aspiration nozzle 1052 in the liquid of the liquid sample 1011 in the sample cup 1010 (see FIG. 2). Then, the syringe pump 1051 is driven to introduce the liquid sample 1011 into the flow path 1054. In the steps other than the liquid sample introduction step S13140, the liquid sample aspiration nozzle 1052 is disposed vertically above the sample cup 1010, and the tip portion of the liquid sample aspiration nozzle 1052 is positioned outside the sample cup 1010.

In addition, the measurement control device 1100 interlocks the syringe pump 1051 and the reference electrode solution feeding mechanism 1060 to feed the reference electrode solution 1061 to the flow cell type liquid junction 1080 via the reference electrode 1090.

Subsequently, the measurement control device 1100 drives the syringe pump 1051 to feed the liquid sample 1011 in the sample cup 1010 as a measurement liquid to the flow cell type liquid junction 1080 through 1071, K-ISE 1072, and Na-ISE 1073 in order. The liquid sample 1011 and the reference electrode solution 1061 come into contact with each other at a junction of flow paths inside the flow cell type liquid junction 1080, a free flow type liquid junction is formed, thereby a potential can be measured.

Thereafter, the measurement control device 1100 drives the syringe pump 1051 to discharge the liquid between the liquid junction 1080 and the syringe pump 1051 to the waste liquid reservoir 1059. After completion of the liquid feeding, the measurement control device 1100 controls the variable mechanism 1053 to lift the liquid sample aspiration nozzle 1052 from the sample cup 1010. Details of the control of the liquid sample aspiration nozzle 1052 and the syringe pump 1051 in the liquid sample introduction step S13140 will be described later.

### (Sample Cup Cleaning Step S13150)

The measurement control device 1100 executes the sample cup cleaning step S13150. In the sample cup cleaning step S13150, the measurement control device 1100 performs the same operation as in the sample cup draining step S13110 described above to drain the liquid sample 1011 remaining in the sample cup 1010. Next, the measurement control device 1100 controls the operations of the diluent pipetting mechanism 1030 and the internal standard solution pipetting mechanism 1040, performs pipetting of the system water into the sample cup 1010 through the specimen pipetting nozzle 1022 using a syringe pump (not illustrated) connected to the specimen pipetting nozzle 1022 to clean the sample cup 1010. Instead of the system water, pipetting of the diluent 1031 or the internal standard solution 1041 can also be performed. It is also possible to perform pipetting of the diluent 1031, the internal standard solution 1041, and the system water and mix them to clean the sample cup 1010.

### (Potential Measurement Step S13160)

The measurement control device 1100 executes the potential measurement step S13160. In the potential measurement step S13160, with the reference electrode 1090 as a reference potential, the measurement control device 1100 measures and records each electromotive force of the flow cell type 1071, K-ISE 1072, and Na-ISE 1073 using a built-in voltage amplifier, AD converter, microcomputer, and the like.

### (Specimen Concentration Calculation Step S13200)

Next, the measurement control device 1100 executes the specimen concentration calculation step S13200. In the specimen concentration calculation step S13200, the measurement control device 1100 obtains the concentration ratio between the specimen 1021 and the internal standard solution. The concentration ratio is obtained based on the difference between the electromotive force of each ISE with the liquid sample 1011 obtained in the potential measurement step S13160 and the electromotive force with respect to the internal standard solution and the slope sensitivity and dilution rate obtained in the calibration step S12000 (FIG. 5) which is the calibration curve creation step. The electromotive force with respect to the internal standard solution is measured with respect to the internal standard solution, similarly to the measurement step S13000 for the liquid sample 1011. The measurement control device 1100 multiplies the concentration ratio by the concentration of the internal standard solution obtained in the calibration step S12000 to obtain the concentration of the specimen 1021 (before offset correction). The measurement control device 1100 obtains the concentration of the specimen 1021 (after the offset correction) by adding the offset correction value to the concentration of the specimen 1021.

Through the above procedure, the measurement control device 1100 obtains the concentrations of Cl, K, and Na in the specimen 1021, and notifies the user of the results by displaying the results on the display or the like.

### (Rinsing of Flow Path 1054 with Liquid Sample)

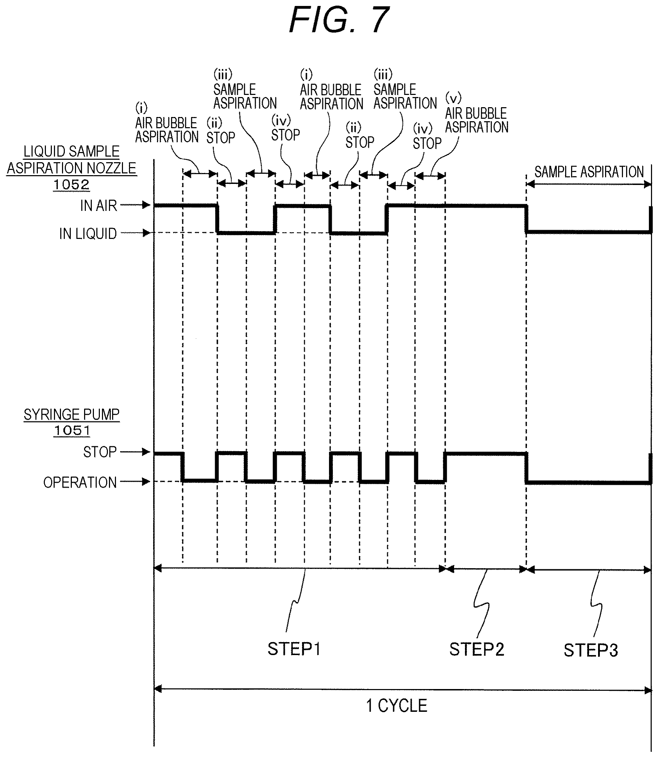

FIG. 7 is a time chart illustrating a position of the liquid sample aspiration nozzle 1052 and an operation of the syringe pump 1051 in the liquid sample introduction step S13140 in FIG. 6. Here, the control of the liquid sample aspiration nozzle 1052 and the syringe pump 1051 in the liquid sample introduction step S13140 will be described in detail. In the present embodiment, when the liquid sample 1011 is introduced into the flow path 1054, the liquid sample 1011 is divided by one or a plurality of gases, and the liquid sample 1011 divided into the one or plurality of gases is introduced into the flow path 1054, whereby the flow path 1054 is rinsed.

### (STEP1: Introduction of Liquid Sample 1011 for Rinsing)

In STEP1, the liquid sample aspiration nozzle 1052 is selectively disposed in the liquid of the liquid sample 1011 in the sample cup 1010 or in the air, and the liquid sample 1011 or a gas is selectively introduced into the flow path 1054. The flow path 1054 is rinsed by dividing the head portion of the liquid sample 1011 by one or a plurality of gases.

First, in STEP1 ((i) AIR BUBBLE ASPIRATION in FIG. 7), in a state where the liquid sample 1011 is in the sample cup 1010, the variable mechanism 1053 removes the tip portion of the liquid sample aspiration nozzle 1052 from the liquid sample 1011 in the sample cup 1010 and disposes the tip portion in the air under the control of the measurement control device 1100. In a state where the tip portion of the liquid sample aspiration nozzle 1052 is disposed in the air, the syringe pump 1051 aspirates an air bubble into the liquid sample aspiration nozzle 1052 and the flow path 1054 under the control of the measurement control device 1100. At this time, the measurement control device 1100 controls the aspiration time and the aspiration speed of the syringe pump 1051, so that a required amount of the air bubble can be accurately aspirated at a required aspiration speed.

Next, in STEP1 ((ii) STOP in FIG. 7), under the control of the measurement control device 1100, the variable mechanism 1053 immerses the tip portion of the liquid sample aspiration nozzle 1052 in the liquid sample 1011 in the sample cup 1010 (disposes the nozzle in the liquid of the liquid sample 1011). The measurement control device 1100 stops the operation of the syringe pump 1051 for a certain period of time (for example, first time period).

After stopping the operation of the syringe pump 1051 for a certain period of time, in STEP1 ((iii) SAMPLE ASPIRATION in FIG. 7), the syringe pump 1051 aspirates the liquid sample 1011 into the liquid sample aspiration nozzle 1052 and the flow path 1054 under the control of the measurement control device 1100. At this time, the measurement control device 1100 controls the aspiration time and the aspiration speed of the syringe pump 1051, so that a required amount of the liquid sample 1011 can be aspirated at a required aspiration speed.

Thereafter, in STEP1 ((iv) STOP in FIG. 7), under the control of the measurement control device 1100, the variable mechanism 1053 removes the tip portion of the liquid sample aspiration nozzle 1052 from the liquid sample 1011 in the sample cup 1010 and disposes the tip portion in the air. The measurement control device 1100 stops the operation of the syringe pump 1051 for a certain period of time (for example, second time period).

The head portion of the liquid sample 1011 can be divided by a gas through (i) air bubble aspiration, (ii) stop, (iii) sample aspiration, and (iv) stop. The head portion of the liquid sample 1011 can be divided by a plurality of gases by executing (i) air bubble aspiration, (ii) stop, (iii) sample aspiration, and (iv) stop for a plurality of times.

At the end of STEP1 ((v) AIR BUBBLE ASPIRATION in FIG. 7), an air bubble is aspirated into the liquid sample aspiration nozzle 1052 and the flow path 1054 in the same manner as in (i) air bubble aspiration described above.

In the present embodiment, (v) air bubble aspiration is executed, but it does not have to be executed. In the present embodiment, (ii) stop and (iv) stop are executed between (i) air bubble aspiration and (iii) sample aspiration. However, (ii) stop and (iv) stop do not have to be performed, or one of (ii) stop and (iv) stop does not have to be executed. The certain periods of time (the first time period and the second time period) during which the syringe pump 1051 stops in (ii) stop and (iv) stop may be the same or different.

### (STEP2: Standby)

Next, the measurement control device 1100 stops the operation of the syringe pump 1051, and stops the head portion of the liquid sample 1011 divided by one or a plurality of gases in the liquid sample aspiration nozzle 1052 and the flow path 1054. For example, the measurement control device 1100 stops the operation of the syringe pump 1051 for a certain period of time (for example, third time period) until the positional instability of the gas due to the pressure loss in the flow path 1054 is suppressed. An adequate time as the time period for stopping the syringe pump 1051 is determined by a pressure loss in consideration of the flow path length of the liquid sample aspiration nozzle 1052 and the flow rate 1054, the flow path inner diameter, the atmospheric pressure, and the like. The third time period is longer than the first time period and the second time period.

### (STEP3: Introduction of Liquid Sample 1011 for Measurement)

After the syringe pump 1051 is stopped for a certain period of time, under the control of the measurement control device 1100, the variable mechanism 1053 immerses the tip portion of the liquid sample aspiration nozzle 1052 in the liquid sample 1011 in the sample cup 1010 (disposes the tip portion in the liquid of the liquid sample 1011). Then, in a state where the tip portion of the liquid sample aspiration nozzle 1052 is disposed in the liquid of the liquid sample 1011, the syringe pump 1051 aspirates the liquid sample 1011 into the liquid sample aspiration nozzle 1052 and the flow path 1054 under the control of the measurement control device 1100. At this time, the measurement control device 1100 controls the aspiration time and the aspiration speed of the syringe pump 1051, so that a required amount of the liquid sample 1011 can be aspirated at a required aspiration speed with accuracy.

At the time of measurement of the liquid sample 1011 with the measurement unit 1300, the variable mechanism 1053 disposes the liquid sample aspiration nozzle 1052 in the air, and separates the liquid sample 1011 contained in the sample cup 1010 and the liquid sample aspiration nozzle 1052. Since the liquid sample 1011 and the liquid sample aspiration nozzle 1052 are separated during the measurement with the measurement unit 1300, it is possible to suppress the influence of static electricity or the like on the measurement unit 1300.

### (Liquid Feeding Control of Liquid Sample 1011)

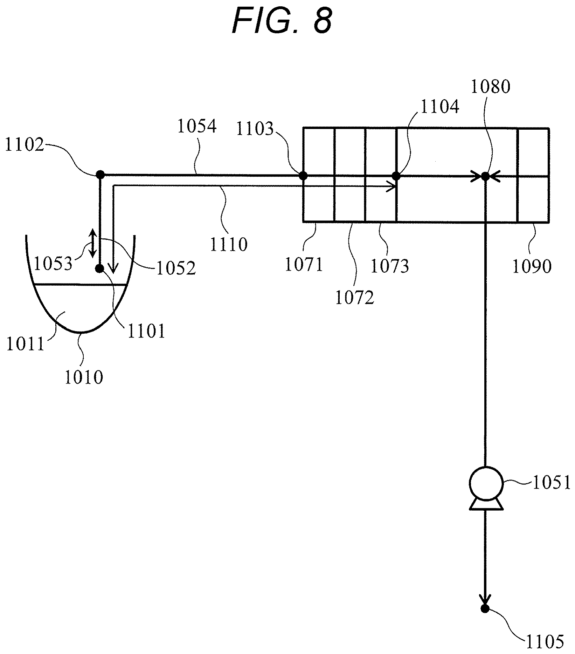

FIG. 8 is a schematic diagram illustrating a portion with a high possibility that the effect of the rinsing using the liquid sample 1011 divided by gas affects the analysis performance. The analysis performance is mainly affected in a range 1110 from a tip 1101 of the liquid sample aspiration nozzle 1052 to a position 1104 corresponding to Na-ISE 1073 of the flow path 1054 via a connection portion 1102 between the liquid sample aspiration nozzle 1052 and the flow path 1054 and a position 1103 where Cl-ISE 1071 of the flow path 1054 is installed.

For stability of analysis performance, it is important to rinse the range 1110 of the flow path 1054 by introducing the head portion of the liquid sample 1011 divided by one or a plurality of gases into the range 1110.

In addition, when the liquid sample 1011 divided by the gas aspirated into the flow path 1054 is aspirated at a low speed, the interface between the liquid phase of the liquid sample 1011 and the gas phase of the gas is stabilized, and the rinsing effect is enhanced. However, when aspiration is performed at a low speed, the throughput of analysis decreases. Thus, in the present embodiment, the liquid feeding speed of the liquid sample 1011 is changed to a low speed at a predetermined timing. For example, the measurement control device 1100 controls the operation of the syringe pump 1051 such that the liquid sample 1011 divided by the gas is fed at a low speed of a first liquid feeding speed at least until reaching the position 1104. Then, the measurement control device 1100 controls the operation of the syringe pump 1051 such that the liquid sample 1011 divided by the gas is fed at a second liquid feeding speed higher than the first feeding speed from the position 1104 after the liquid sample 1011 passes through the position 1104. The second liquid feeding speed is, for example, 1.5 times or more the first liquid feeding speed.

By controlling the liquid feeding speed as described above, the liquid sample aspiration nozzle 1052 and the flow path 1054 up to Cl-ISE 1071, K-ISE 1072, and Na-ISE 1073 of the measurement unit 1300 can be carefully rinsed with the liquid sample 1011 divided by the gas flowing at a low speed. Further, by controlling the liquid feeding speed as described above, the liquid sample 1011 that has passed through 1071, K-ISE 1072, and Na-ISE 1073 can be drained at a high speed, and a measurement liquid (liquid sample 1011) subsequent to the liquid sample 1011 divided by the gas can be introduced into 1071, K-ISE 1072, and Na-ISE 1073. As a result, a decrease in throughput can be prevented.

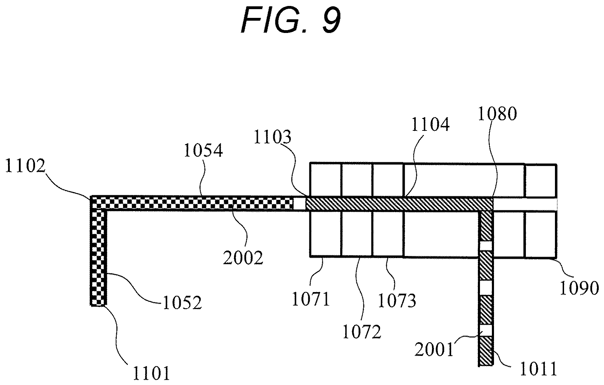

When the liquid amount of the liquid sample 1011 is small and insufficient for filling the liquid sample aspiration nozzle 1052 and the flow path 1054, the next liquid sample to be measured, the liquid sample 1011, any liquid (referred to as a push-in liquid) different from the next liquid sample to be measured, and any gas (referred to as a push-in liquid), or a combination thereof may be selectively introduced into the liquid sample aspiration nozzle 1052 and the flow path 1054 in a state where the liquid sample 1011 is introduced into the liquid sample aspiration nozzle 1052 and a part of the flow path 1054. The push-in liquid and the push-in gas are collectively referred to as a push-in fluid. Alternatively, a liquid in which a part of the liquid sample 1011 left in the sample cup 1010 and the next liquid sample to be measured are mixed may be selectively introduced into the liquid sample aspiration nozzle 1052 and the flow path 1054. Alternatively, any liquid (push-in liquid) different from a part of the liquid sample 1011 left in the sample cup 1010 or the next liquid sample to be measured may be selectively introduced into the liquid sample aspiration nozzle 1052 and the flow path 1054. With this configuration, by pushing in the liquid sample 1011 with the any liquid or gas, the liquid sample 1011 can be held at a position up to Cl-ISE 1071, K-ISE 1072, Na-ISE 1073, and liquid junction 1080 in the flow path 1054, and the analysis can be performed. To correctly perform the potential measurement step S13160, the liquid sample 1011 is filled in a portion of the flow path 1054 from the position 1103 to the liquid junction 1080 via the position 1104 so that no gas is present in the portion. FIG. 9 is a schematic diagram illustrating a state in which the liquid sample 1011 divided by the gas is pushed by any liquid or gas, and the liquid sample 1011 is held at a position up to Cl-ISE 1071, K-ISE 1072, Na-ISE 1073, and liquid junction 1080 in the flow path 1054. When the liquid amount of the liquid sample 1011 is small and insufficient for filling the liquid sample aspiration nozzle 1052 and the flow path 1054, in STEP3 of FIG. 7: INTRODUCTION OF LIQUID SAMPLE 1011 FOR MEASUREMENT, the liquid sample 1011 divided by a gas 2001 is pushed by any liquid (push-in liquid) 2002 or gas, whereby the liquid sample 1011 can be held at a position up to Cl-ISE 1071, K-ISE 1072, Na-ISE 1073, and the liquid junction 1080 in the flow path 1054.

### (Details of Liquid Sample Introduction Step S13140)

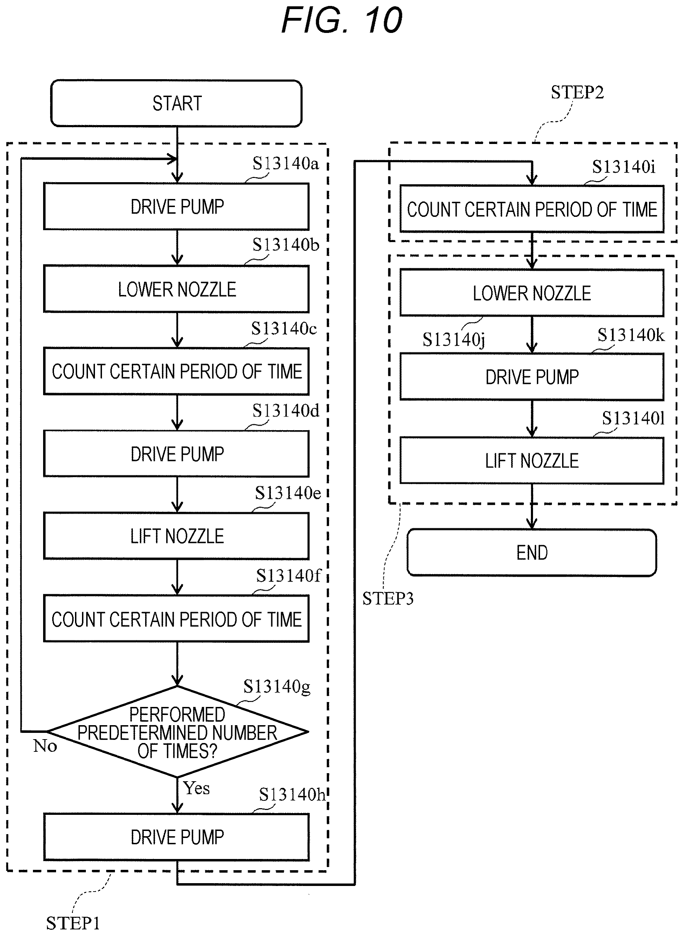

FIG. 10 is a flowchart illustrating details of the liquid sample introduction step S13140 in FIG. 6. Each step of FIG. 10 is executed by the processor 1100a executing a program included in the measurement control device 1100. The measurement control device 1100 executes each processing of S13140a to S13140h in STEP1, executes the processing of S13140i in STEP2, and executes the processing of S13140j to S13140l in STEP3.

First, the measurement control device 1100 drives the syringe pump 1051 in a state where the tip portion of the liquid sample aspiration nozzle 1052 is disposed in the air (S13140a). As a result, an air bubble is aspirated into the liquid sample aspiration nozzle 1052 and the flow path 1054. The measurement control device 1100 drives the syringe pump 1051 for a predetermined time. When the drive source of the syringe pump 1051 is a stepping motor, the syringe pump 1051 is driven by a predetermined number of steps.

Next, the measurement control device 1100 controls the variable mechanism 1053 to lower the liquid sample aspiration nozzle 1052 and dispose the tip portion of the liquid sample aspiration nozzle 1052 in the liquid of the liquid sample 1011 in the sample cup 1010 (S13140b).

In this state, the measurement control device 1100 counts a certain period of time (first time period) in a state where the syringe pump 1051 is stopped (S13140c). The order of executing the lowering of the liquid sample aspiration nozzle 1052 (S13140b) and the counting of the certain period of time (S13140c) may be reversed.

After counting the certain period of time, the measurement control device 1100 drives the syringe pump 1051 in a state where the tip portion of the liquid sample aspiration nozzle 1052 is disposed in the liquid of the liquid sample 1011 (S13140d). As a result, the liquid sample 1011 is aspirated into the liquid sample aspiration nozzle 1052 and the flow path 1054. The measurement control device 1100 drives the syringe pump 1051 for a predetermined time.

Next, the measurement control device 1100 controls the variable mechanism 1053 to lift the liquid sample aspiration nozzle 1052 and dispose the tip portion of the liquid sample aspiration nozzle 1052 in the air (S13140e).

In this state, the measurement control device 1100 counts a certain period of time (second time period) in a state where the syringe pump 1051 is stopped (S13140f). The order of executing the lifting of the liquid sample aspiration nozzle 1052 (S13140e) and the counting of the certain period of time (S13140f) may be reversed.

Then, the measurement control device 1100 determines whether the aspiration of the air bubble and the liquid sample 1011 (S13140a to S13140f) has been performed a predetermined number of times (S13140g). When the aspiration of air bubble and the liquid sample 1011 (S13140a to S13140f) has been performed a predetermined number of times (S13140g: Yes), the processing of S13140h is performed. When the aspiration of the air bubble and the liquid sample 1011 (S13140a to S13140f) has not been performed a predetermined number of times (S13140g: No), the aspiration of air bubble and the liquid sample 1011 (S13140a to S13140f) is repeated until the aspiration is performed the predetermined number of times.

Then, the measurement control device 1100 drives the syringe pump 1051 (S13140h). As a result, an air bubble is aspirated into the liquid sample aspiration nozzle 1052 and the flow path 1054.

Next, the measurement control device 1100 counts a certain period of time (third time period) in a state where the syringe pump 1051 is stopped (S13140i).

After counting a certain period of time, the measurement control device 1100 controls the variable mechanism 1053 to lower the liquid sample aspiration nozzle 1052 and dispose the tip portion of the liquid sample aspiration nozzle 1052 in the liquid of the liquid sample 1011 in the sample cup 1010 (S13140j).

Then, the measurement control device 1100 drives the syringe pump 1051 in a state where the tip portion of the liquid sample aspiration nozzle 1052 is disposed in the liquid of the liquid sample 1011 in the sample cup 1010 (S13140k). As a result, the liquid sample 1011 for measurement is supplied to the measurement unit 1300.

Finally, the measurement control device 1100 controls the variable mechanism 1053 to lift the liquid sample aspiration nozzle 1052 and dispose the tip portion of the liquid sample aspiration nozzle 1052 in the air (S13140l). In the present embodiment, at the time of measurement of the liquid sample 1011 with the measurement unit 1300, the liquid sample aspiration nozzle 1052 is disposed in the air, and the liquid sample 1011 contained in the sample cup 1010 and the liquid sample aspiration nozzle 1052 are separated from each other.

### (Effects of Present Embodiment)

In the present embodiment, by dividing the head portion of the liquid sample 1011 by one or a plurality of gases, the liquid sample aspiration nozzle 1052 and the flow path 1054 can be rinsed together with the liquid sample 1011. This can prevent the liquid sample 1011 to be measured from being contaminated with a remaining liquid sample measured last time and can ensure the analysis performance. In addition, since the liquid sample 1011 used at the time of rinsing is divided by a gas, the liquid amount of the liquid sample 1011 necessary for cleaning the flow path 1054 can be reduced.

In the present embodiment, the syringe pump 1051 is used as a unit for aspirating the air bubbles into the flow path 1054. Thereby, the quantitativeness can be secured at the time of feeding the liquid sample 1011 even when the liquid amount of the liquid sample 1011 is small, and the quantitativeness of the feeding amount of the air bubbles can be secured even when the amount of the air bubbles is small. Further, to aspirate air bubbles into the flow path 1054, there is no risk of wear of the flow path components due to the opening and closing operation of a pinch valve as in PTL 1. Thus, it is possible to reduce the frequency of replacement of the components. In the present embodiment, it is possible to obtain the above-described effects only through control using an existing configuration without requiring a pinch valve or an air transport pipe as in PTL 1.

In the present embodiment, by switching the liquid feeding speed of the liquid sample 1011 from the first liquid feeding speed to a high speed of the second liquid feeding speed, it is possible to prevent a decrease in analysis throughput while realizing careful rinsing of the flow path 1054.

In the present embodiment, the liquid sample 1011 and the liquid sample aspiration nozzle 1052 are separated during the measurement with the measurement unit 1300. Thus, it is possible to suppress the influence of static electricity or the like on the measurement unit 1300, and it is possible to prevent a decrease in the throughput of analysis even though the sample cup cleaning step S13150 is performed in the sample cup 1010 during the measurement with the measurement unit 1300.

In the present embodiment, by performing (ii) stop and (iv) stop between (i) air bubble aspiration and (iii) sample aspiration, it is possible to wait until the air bubbles are stabilized in the flow path 1054. As a result, the liquid sample 1011 divided by one or a plurality of gases can be stably introduced into the flow path 1054.

Similarly, after the liquid sample 1011 divided by one or a plurality of gases are introduced into the flow path 1054, waiting is performed for a certain period of time in STEP2, whereby it is possible to wait until the air bubbles are stabilized in the flow path 1054.

In the present embodiment, by using the syringe pump 1051 as the liquid feeding mechanism, the liquid sample 1011 divided by one or a plurality of gases can be accurately and quickly introduced into the flow path 1054 even when the amount of the liquid sample 1011 is small.

### (Modification)

The present disclosure is not limited to the above-described embodiment but includes various modifications. For example, the above-described embodiment has been described in detail for easy understanding of the present invention, and the present invention is not necessarily limited to those having all the described configurations. A part of the configuration of a certain embodiment can be replaced with the configuration of another embodiment, and the configuration of a certain embodiment can be added to the configuration of another embodiment. A part of the configuration of each embodiment can be added to, deleted from, and replaced with a part of another configuration.

For example, in the above-described embodiment, the variable mechanism 1053 moves the liquid sample aspiration nozzle 1052 in the up-down directions. Alternatively, the variable mechanism 1053 may move the sample cup 1010 in the up-down directions.

In the above-described embodiment, the automatic electrolyte analysis device 1000 is exemplified as the analysis device of the present invention, but the analysis device of the present invention is not limited to an automatic electrolyte analysis device. For example, the analysis device of the present invention may be a blood gas analysis device.

In the above-described embodiment, an example in which the liquid feeding speed of the liquid sample 1011 is changed to a low speed at a predetermined timing has been described. Alternatively, the first liquid feeding speed and the second liquid feeding speed of the liquid sample 1011 may be the same speed. For example, when the throughput of analysis is emphasized, it is possible to increase the throughput by setting the first liquid feeding speed and the second liquid feeding speed to the same high speed.

### Reference Signs List

- 1000: automatic electrolyte analysis device
- 1010: sample cup
- 1020: specimen pipetting mechanism
- 1021: specimen
- 1022: specimen pipetting nozzle
- 1023: specimen container
- 1030: diluent pipetting mechanism
- 1031: diluent
- 1032: diluent container bottle
- 1033: diluent flow path
- 1034: diluent pipetting nozzle
- 1035: diluent pump
- 1040: internal standard solution pipetting mechanism
- 1041: internal standard solution
- 1042: internal standard solution container bottle
- 1043: internal standard solution flow path
- 1044: internal standard solution pipetting nozzle
- 1045: internal standard solution pump
- 1050: liquid sample introduction mechanism
- 1051: syringe pump
- 1052: liquid sample aspiration nozzle
- 1053: liquid sample aspiration nozzle/sample cup relative position variable mechanism
- 1054: flow path
- 1059: waste liquid reservoir
- 1060: reference electrode solution feeding mechanism
- 1061: reference electrode solution
- 1062: reference electrode solution container bottle
- 1063: reference electrode solution pump
- 1071: Cl-ISE (chloride ion selective electrode)
- 1072: K-ISE (potassium ion selective electrode)
- 1073: Na-ISE (sodium ion selective electrode)
- 1080: liquid junction
- 1090: reference electrode
- 1100: measurement control device
- 1100a: processor
- 1100b: main storage unit
- 1100c: auxiliary storage unit
- 1100d: communication I/F
- 1100e: input/output unit
- 1200: sample cup draining mechanism
- 1201: waste liquid trap
- 1202: vacuum pump
- 1203: electromagnetic valve
- 1204: waste liquid flow path
- 1205: draining nozzle
- 1300: measurement unit

## Claims

1. An analysis device comprising:
a cup configured to contain a liquid sample to be measured;
a nozzle configured to aspirate the liquid sample from the cup;
a flow path through which the liquid sample aspirated by the nozzle passes;
a measurement unit provided on the flow path and configured to measure the liquid sample;
a liquid feeding mechanism configured to feed the liquid sample in the flow path;
a variable mechanism configured to vary a relative position between the cup and the nozzle; and
a control device configured to control operations of the variable mechanism and the liquid feeding mechanism,
wherein the control device is configured to control the operation of the variable mechanism to dispose the nozzle in liquid of the liquid sample contained in the cup or in air, and control the operation of the liquid feeding mechanism to introduce the liquid sample divided by one or a plurality of gases into the flow path and to rinse the flow path.

2. The analysis device according to claim 1, wherein
the control device is configured to introduce the liquid sample divided by one or a plurality of gases into the flow path by repeating, one or a plurality of times, (1) controlling the operation of the liquid feeding mechanism to introduce a gas into the flow path in a state where the nozzle is disposed in the air, (2) stopping the operation of the liquid feeding mechanism for a certain period of time after the gas is introduced into the flow path, and (3) controlling the operation of the liquid feeding mechanism to introduce the liquid sample into the flow path in a state where the nozzle is disposed in the liquid of the liquid sample.

3. The analysis device according to claim 1, wherein
the control device is configured to control the operation of the liquid feeding mechanism to feed the liquid sample divided by the one or plurality gases to a position corresponding to the measurement unit of the flow path at a first liquid feeding speed, and control the operation of the liquid feeding mechanism to feed the liquid sample from the position corresponding to the measurement unit of the flow path at a second liquid feeding speed higher than the first liquid feeding speed.

4. The analysis device according to claim 1, wherein
the control device is configured to stop the operation of the liquid feeding mechanism for a certain period of time after the liquid sample divided by the one or plurality of gases is introduced into the flow path.

5. The analysis device according to claim 1, wherein
the control device is configured to:
after the liquid sample divided by the one or plurality of gases is introduced into the flow path, control the operation of the liquid feeding mechanism in a state where the nozzle is disposed in the liquid of the liquid sample to introduce the liquid sample for measurement into the flow path; and
after the liquid sample for measurement is introduced into the flow path, control the operation of the variable mechanism and the liquid feeding mechanism to introduce a push-in fluid different from the liquid sample into the flow path, and move the push-in fluid in the flow path to move the liquid sample for measurement previously introduced into the flow path to the measurement unit.

6. The analysis device according to claim 1, wherein
the control device is configured to control the operation of the variable mechanism to dispose the nozzle in the air when measuring the liquid sample with the measurement unit and separate the nozzle from the liquid sample contained in the cup.

7. The analysis device according to claim 1, wherein the liquid feeding mechanism is a syringe pump.

8. The analysis device according to claim 1, wherein the measurement unit is configured to measure a specific electrolyte contained in the liquid sample.

9. A rinsing method for a flow path of an analysis device, the method comprising:
containing a liquid sample to be measured in a cup;
controlling an operation of a variable mechanism configured to vary a relative position between the cup and a nozzle configured to aspirate the liquid sample from the cup to dispose the nozzle in liquid of the liquid sample contained in the cup and in air;
controlling an operation of a liquid feeding mechanism configured to feed the liquid sample in a flow path through which the liquid sample aspirated by the nozzle passes to introduce the liquid sample divided by one or a plurality of gases into the flow path and rinse the flow path; and
controlling the operations of the variable mechanism and the liquid feeding mechanism after introducing the liquid sample divided by the one or plurality of gases into the flow path to introduce the liquid sample for measurement to a measurement unit on the flow path that measures the liquid sample.

10. The rinsing method for a flow path of an analysis device according to claim 9, wherein
the introduction of the liquid sample divided by the one or plurality of gases into the flow path includes introducing the liquid sample divided by one or a plurality of gases into the flow path by repeating, one or a plurality of times, (1) controlling the operation of the liquid feeding mechanism to introduce a gas into the flow path in a state where the nozzle is disposed in the air, (2) stopping the operation of the liquid feeding mechanism for a certain period of time after the gas is introduced into the flow path, and (3) controlling the operation of the liquid feeding mechanism to introduce the liquid sample into the flow path in a state where the nozzle is disposed in the liquid of the liquid sample.

11. The rinsing method for a flow path of an analysis device according to claim 9, the method further comprising:
feeding the liquid sample divided by the one or plurality of gases to a position corresponding to the measurement unit of the flow path at a first liquid feeding speed; and
feeding the liquid sample divided by the one or plurality of gases from the position corresponding to the measurement unit of the flow path at a second liquid feeding speed higher than the first liquid feeding speed.

12. The rinsing method for a flow path of an analysis device according to claim 9, the method further comprising, after the liquid sample divided by the one or plurality of gases is introduced into the flow path, stopping the operation of the liquid feeding mechanism for a certain period of time.

13. The rinsing method for a flow path of an analysis device according to claim 9, further comprising:
after the liquid sample divided by the one or plurality of gases is introduced into the flow path, controlling the operation of the liquid feeding mechanism in a state where the nozzle is disposed in the liquid of the liquid sample to introduce the liquid sample for measurement into the flow path; and
after the liquid sample for measurement is introduced into the flow path, controlling the operations of the variable mechanism and the liquid feeding mechanism to introduce a push-in fluid different from the liquid sample into the flow path and moving the push-in fluid in the flow path to move the liquid sample for measurement previously introduced into the flow path to the measurement unit.

14. The rinsing method for a flow path of an analysis device according to claim 9, further comprising disposing the nozzle in the air when measuring the liquid sample with the measurement unit to separate the nozzle from the liquid sample contained in the cup.

15. The rinsing method for a flow path of an analysis device according to claim 9, wherein the analysis device is an electrolyte analysis device.
